# EUROPÄISCHE PATENTSCHRIFT

(11) **EP 1 972 193 B1**
(45) Veröffentlichungstag und Bekanntmachung des Hinweises auf die Patenterteilung: **21.03.2012**
(21) Anmeldenummer: 08002903.6
(22) Anmeldetag: 16.02.2008
(51) Int. Cl.: A01K 27/00

(54) **Mechanisch auf- und abwickelbare Leine zum Führen von Tieren**
Mechanical retractable and extendable leash for animals
Laisse enroulable et déroulable mécaniquement pour mener des animaux

(30) Priorität: 20.03.2007 DE 202007004273 U
(43) Veröffentlichungstag der Anmeldung: 24.09.2008
(73) Patentinhaber: Flexi-Bogdahn Technik GmbH & Co. KG, 22941 Bargteheide (DE)
(72) Erfinder: Bleshoy, Ernst-Peter, 22455 Hamburg (DE)
(74) Vertreter: Jaeschke, Rainer

(56) Entgegenhaltungen:
- DE-U1- 8 509 585

## Beschreibung

Die Erfindung betrifft eine mechanisch auf- und abwickelbare Leine mit einer Seilrolle, einem Seil oder Gurt und einer Bremseinrichtung für die Seilrolle zum Führen von Tieren, bei welcher Leine der Gurt oder das Seil entgegen der Kraft einer Feder von der Seilrolle abwickelbar und aufgrund der Kraft der Feder auf die Seilrolle aufwickelbar ist, welche Bremseinrichtung eine Bremstaste umfasst, die von einer Ruheposition, in der die Seilrolle frei drehbar ist, in eine Wirkposition gebracht werden kann, in der die Bremstaste ein Abwickeln des Seils von der Seilrolle sperrt, welche Bremstaste ein Oberteil, das aus dem Leinengehäuse hinausragt und eine Betätigung durch den Benutzer erlaubt, und ein Unterteil aufweist, das mit der Seilrolle zusammenwirkt. Insbesondere betrifft die Erfindung eine automatische Hundeleine, so dass im Folgenden überwiegend von einer solchen Hundeleine die Rede ist, ohne dass damit eine Beschränkung verbunden sein soll.

Eine derartige Bremseinrichtung für Hundeleinen ist beispielsweise aus der DE 298 04 615 U1 bekannt. Die Seilrolle weist entlang ihrem Umfang eine Vielzahl von Vorsprüngen auf, gegen die die Bremstaste in der niedergedrückten Lage anschlägt. Dadurch wird ein weiteres Abwickeln des Seils von der Seilrolle verhindert. Die Bremstaste kann in der niedergedrückten Lage durch einen Verriegelungshebel arretiert werden.

Befindet sich die Bremstaste in der Ruhelage, kann das Seil von der Seilrolle entgegen der Kraft einer Feder abgerollt werden. Wirkt keine Zugkraft auf das Seil wickelt sich das Seil aufgrund der Federkraft wieder auf die Seilrolle auf. Die DE 85 09 585 U1 beschreibt eine Hundeleine der eingangs geschilderten Art, deren maximale abwickelbare Länge des Seils durch einen Sperrklinkenmechanismus einstellbar ist.

Ein Problem besteht bei solchen Leinen beim Zurückholen eines Hundes. Hier muss die Hundeleine zunächst bei freigegebener Seilrolle in Richtung auf den Hund bewegt werden. Das Seil kann sich während dieser Bewegung auf die Seilrolle aufwickeln. Anschließend muss die Bremstaste betätigt werden, so dass bei der Rückholbewegung der Hand die Seilrolle arretiert ist und sich das Seil nicht wieder abwickelt. Es ist demnach ein ständiges Betätigen der Bremstaste zu den richtigen Zeitpunkten erforderlich, um die Leine trotzt einwirkende Zugkraft zu verkürzen.

Grundsätzlich ist es möglich, die Bremstaste in Form einer Sperrklinke auszubilden derart, dass die Bremstaste in niedergedrückter Lage bei der Aufwickelbewegung über den Vorsprung der Seilrolle hinweg gleitet. Dies verursacht jedoch beim Aufwickelvorgang unerwünschte Geräusche, da die Bremstaste wenigstens ein federndes Element aufweist, das die Bremstaste oder deren wirksames Teil beim Überspringen eines Vorsprunges wieder in Eingriffslage bringt. Es entsteht ein Rattern, das vermieden werden soll.

Der Erfindung liegt die Aufgabe zugrunde, eine Bremseinrichtung der eingangs geschilderten Art so auszubilden, dass ein Aufrollen des Seils auch bei gedrückter Bremstaste ohne Geräuschentwicklung möglich ist.

Die Aufgabe wird gemäß der Erfindung dadurch gelöst, dass die Bremstaste ein Oberteil, das aus dem Leinengehäuse hinausragt und eine Betätigung durch den Benutzer erlaubt, und ein Unterteil aufweist, das mit der Seilrolle zusammenwirkt und am Oberteil verschwenkbar verbunden ist derart, dass das Unterteil in Aufwickelrichtung des Seils verschwenkbar ist derart, dass in der Wirkposition der Bremstaste ein Abwickeln des Seils von der Seilrolle verhindert wird und ein Aufwickeln auf die Seilrolle möglich ist, und dass in der Wirkposition das freie Ende des Unterteils reibend an der Seilrolle anliegt, um das Unterteil durch eine Drehbewegung der Seilrolle in Aufwickelrichtung zu verschwenken. Diese Anordnung erlaubt ein Aufwickeln des Seils auch bei niedergedrückter Bremstaste. Es wird durch die zweiteilige Ausbildung der Bremstaste erreicht, dass sich das Unterteil bei der Aufwickelbewegung der Seilrolle verschwenkt und somit nicht mehr die Vorsprünge berührt. Durch die Reibung wird das Unterteil in der verschwenkten Lage gehalten, in der es außer Eingriff mit den Vorsprüngen ist. Ein Rattern wird zuverlässig vermieden.

Aufgrund der reibenden Verbindung zwischen Unterteil und Seilrolle wird bei einer Bewegung der Seilrolle in die anderen Drehrichtung, also in Abwickelrichtung, das Unterteil wieder in eine Lage verschwenkt, in der es in Eingriff mit einem Vorsprung der Seilrolle gelangt. Die Seilrolle wird gesperrt. Es ist daher möglich, das Seil bei dauernd gedrückter Bremstaste aufzuwickeln.

Die Reibkraft dient demnach nur zum Bewegen des Unterteils der Seilrolle und kann entsprechend klein bemessen sein. Vor allem kann gleichwohl ein sicheres und zügiges Aufwickeln des Seils erreicht werden, da die Reibkraft wesentlich kleiner ist als die Kraft der Feder, die auf die Seilrolle wirkt.

Zweckmäßig ist es, wenn das Unterteil der Bremstaste in Eindrückrichtung verschiebbar mit dem Oberteil verbunden ist. Dies kann beispielsweise dadurch erreicht werden, dass das Unterteil in oder mit einem Langloch auf einem Zapfen verschwenkbar und verschiebbar mit dem Oberteil verbunden ist. Besonders zweckmäßig ist es dabei, wenn das Unterteil entgegen der Kraft einer Feder verschiebbar mit dem Oberteil verbunden ist. Es wird dadurch erreicht, dass sich beim Niederdrücken der Bremstaste in deren Wirkposition das Unterteil relativ zum Oberteil bewegen kann. Die Feder zwischen Oberteil und Unterteil kann dann so dimensioniert sein, dass stets die gleiche Reibkraft erzeugt wird unabhängig davon wie fest die Bremstaste gedrückt wird.

Es ist weiterhin zweckmäßig, wenn die Bremstaste bis zu einem Anschlag in Richtung auf die Seilrolle bewegbar ist. Damit wird sichergestellt, dass das Unterteil nur aufgrund der Federkraft auf die Seilrolle gedrückt wird. Dann kann die gewünschte Reibkraft eingestellt werden. Insbesondere wird erreicht, dass die Bremstaste nur soweit niedergedrückt werden kann, bis das Unterteil reibend an der Seilrolle anliegt. Ein stärkerer Druck kann nicht ohne weiteres ausgeübt werden. Es kann vorgesehen werden, dass die Kraft der Feder so bemessen ist, dass sich die Seilrolle bei bis zum Anschlag gedrückter Bremstaste in Aufrollrichtung drehen kann.

Es ist günstig, wenn das Unterteil in Bezug auf seine Drehachse konkav ausgebildet ist derart, dass es sowohl in der unverschwenkten als auch in der verschwenkten Position reibend an der Seilrolle anliegt. Dadurch wird in der Wirklage der Bremstaste ein ständiger Kontakt des Unterteils mit der Seilrolle bewirkt, wodurch ein zuverlässiges Hin- und Herschwenken des Unterteils bei einem Wechsel der Drehrichtung erzielt wird.

An welchem Bereich das Unterteil an der Seilrolle anliegt, ist grundsätzlich beliebig. Zweckmäßig ist es jedoch, wenn das Unterteil reibend an der Umfangsfläche der Seilrolle anliegt. Die Seilrolle kann einen Flansch aufweisen, der die Vorsprünge seitlich überragt oder bündig mit diesen abschließt. Die Umfangsfläche des Flansches ist dann von der Bremstaste gut zugänglich.

Weiterhin kann die Reibfläche der Seilrolle mit einem Reibelement versehen sein. Das Reibelement kann als O-Ring ausgebildet und um den Umfang der Seilrolle gelegt sein. Ein solches Reibelement ist in einfacher Weise herzustellen und zu montieren. Es kann zudem in einer Nut auf der Umfangsrichtung teilweise eingelassen sein und nur teilweise über die Umfangsfläche hinausragen. Dies hat den Vorteil, dass ein Abrutschen des Reibelements von der Seilrolle zuverlässig vermieden wird.

Weiterhin kann die Reibfläche des Unterteils zumindest in dem Bereich, der in der verschwenkten Position reibend an der Seilrolle anliegt, aus verschleißfestem Material bestehen oder ein Reibelement aus verschleißfestem Material aufweisen. Das Unterteil liegt während das Aufwickeln stets auf der Seilrolle an. Mit einem solchen verschleißfesten Material im Bereich der Reibfläche kann der Verschleiß reduziert und ein zuverlässiger Dauerbetrieb gewährleistet werden. Das verschleißfeste Material kann beispielsweise aus einem Keramikwerkstoff bestehen und als Einsatz der Reibfläche ausgebildet sein.

Gemäß einer weitergehenden Ausführungsform der Erfindung ist vorgesehen dass die Bremstaste nach Überwinden einer Sperre in Richtung auf die Seilrolle über den Anschlag hinaus bewegbar ist. Dies hat den Vorteil, dass der Druck auf die Bremstaste unmittelbar auf das Unterteil wirkt und somit die Reibkraft erhöht werden kann, so dass die Seilrolle auch in Aufwickelrichtung gesperrt ist.

Im einzelnen kann die Anordnung so getroffen sein, dass sich das Langloch im wesentlichen parallel zur Bewegungsrichtung der Bremstaste erstreckt. Beim Niederdrücken und Bewegen der Bremstaste in Richtung auf die Seilrolle in die Wirkposition wird das Unterteil relativ zum Oberteil im Langloch nach oben gedrückt und drückt in der Anschlagposition nur mit der Federkraft zwischen Oberteil und Unterteil auf die Seilrolle. Wird der Anschlag überwunden und die Bremstaste weiter eingedrückt, gelangt der Drehzapfen an das Ende des Langlochs. Dann kann der Druck auf die Bremstaste unmittelbar auf das Unterteil zum Erzeugen einer hohen Reibkraft übertragen werden. Die Seilrolle wird zuverlässig in beiden Drehrichtungen angehalten.

Es kann vorgesehen werden, dass die Sperre durch Aufbringen einer vorbestimmbaren Kraft auf das Oberteil überwindbar ist. Dann kann die Reibkraft auf die Seilrolle durch instinktives stärkeres Drücken auf die Bremstaste erhöht werden.

Grundsätzlich ist es zweckmäßig, wenn die Bremstaste entgegen der Kraft einer Feder in Richtung auf die Seilrolle bewegbar ist. Dann ist in der sich einstellenden Ruhelage der Bremstaste die Seilrolle gelöst, und der Hund kann sich entsprechend der Länge der Leine frei bewegen.

Es kann vorgesehen werden, dass das Oberteil das Unterteil entlang der Schiebebewegung führt und dass das Oberteil einen Anschlag für das Unterteil in Abwickelrichtung bildet. Damit wird sichergestellt, dass in der niedergedrückten Wirkposition der Bremstaste das Unterteil entgegen der Abwickelrichtung abgestützt ist und die Seilrolle sperren kann.

Zusätzlich kann ein Verriegelungshebel vorhanden sein, der die Bremstaste in der Wirkposition arretiert. Es kann vorgesehen werden, dass der Verriegelungshebel mit dem Oberteil der Bremstaste zusammenwirkt. Dann ist die Rolle jedoch lediglich in Abwickelrichtung gesperrt, da sich das Unterteil nach wie vor verschwenken kann.

Es ist daher weiterhin zweckmäßig, wenn der Verriegelungshebel in der Arretierlage die Seilrolle in Aufwickelrichtung sperrt. Dies hat den Vorteil, dass bei Betätigen des Verriegelungshebels die Seilrolle in beiden Drehrichtungen gesperrt ist. Das Seil weist dann die gewählte Länge auf und wickelt sich weder ab noch auf.

Die Seilrolle weist entlang ihrem Umfang eine Vielzahl von Vorsprüngen auf, die bei gedrückter Bremstaste mit deren Unterteil in Abwickelrichtung zusammenwirken und die in der Arretierlage des Verriegelungshebels mit diesem zusammenwirken, um die Seilrolle in Aufwickelrichtung zu sperren. Im einzelnen kann die Anordnung so getroffen sein, dass die Vorsprünge sägezahnförmig ausgebildet sind und eine radiale Kante aufweisen, die den Anschlag für das Unterteil in Abwickelrichtung bildet. Damit wird eine sichere Anlage des Unterteils an dem Vorsprung bewirkt. Die zur Radialen geneigte Kante liegt auf der Seite des Vorsprungs in Aufwickelrichtung und bildet einen Anschlag für den Verriegelungshebel in Aufwickelrichtung.

Der Verriegelungshebel kann zwischen einer Loslage und der Arretierlage um eine Achse verschwenkbar im Leinengehäuse gelagert sein und zwei Fortsätze aufweisen, von denen der eine in Arretierlage mit dem Oberteil der Bremstaste und der andere mit der Seilrolle zusammenwirkt. Damit können mit dem Verriegelungshebel sowohl die Bremstaste in deren Wirkposition und die Seilrolle in Aufwickelrichtung gehalten werden.

Weiterhin ist es zweckmäßig, wenn die Abmessungen des Verriegelungshebels und des Unterteils der Bremstaste so gewählt sind, dass die Seilrolle in der gesperrten Lage fest oder zumindest nur mit geringem Spiel gehalten ist. Dadurch wird ein fester Halt des Seils bewirkt, und die Leine macht keine Geräusche im gesperrten und verriegelten Zustand.

Die Erfindung wird im Folgenden anhand der schematischen Zeichnung näher erläutert. Es zeigen:
- Fig. 1: eine Leine mit einer Bremseinrichtung gemäß der Erfindung im Längsschnitt,
- Fig. 2 a - e: die Leine gemäß Fig. 1 in verschieden Situationen bei gedrückter Bremstaste,
- Fig. 3 a - c: die Leine gemäß Fig. 1 in verschiedenen Situationen bei betätigtem Verriegelungshebel,

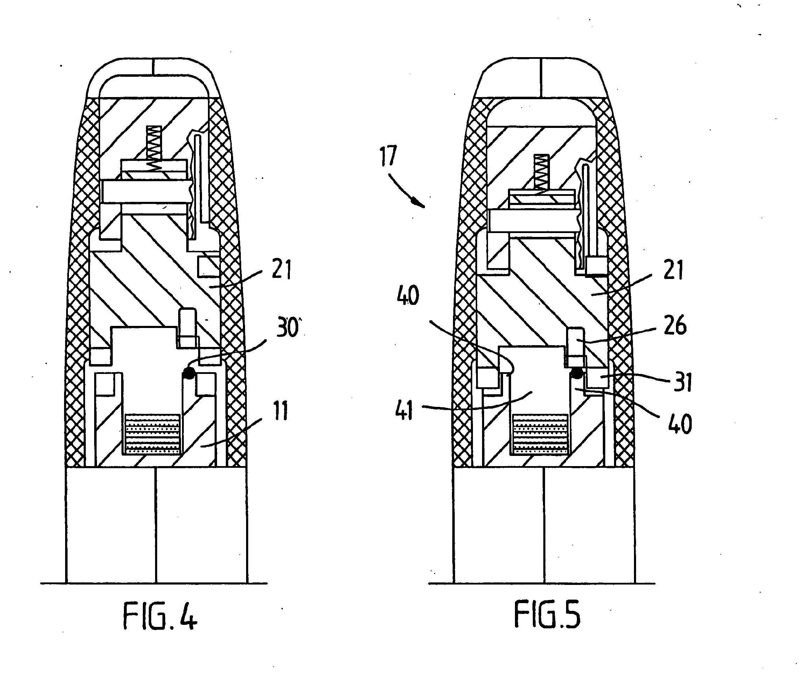

- Fig. 4: einen Querschnitt der Leine entlang der Linie A-A in Fig. 1 in Ruhestellung und
- Fig. 5: einen Querschnitt der Leine entlang der Linie A-A in Fig. 1 bei betätigter Bremstaste.

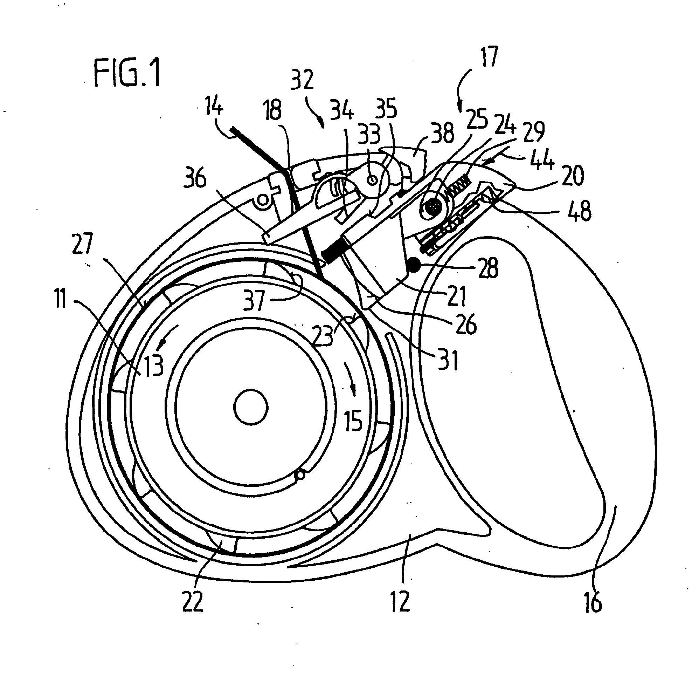

Die in der Zeichnung dargestellt Leine weist eine Seilrolle 11 auf, die in einem Leinengehäuse 12 drehbar gelagert ist. Es ist eine nicht gezeigte Feder vorhanden, gegen deren Kraft die Seilrolle 11 in Abwickelrichtung 13 zum Abwickeln des Seils 14 und aufgrund dieser Federkraft in Aufwickelrichtung 15 zum Aufwickeln des Seils drehbar ist. Das Gehäuse 12 weist einen Handgriff 16 auf, mit dem die Leine gehalten werden kann. Weiterhin ist eine Bremseinrichtung mit einer Bremstaste 17 vorhanden, mit dem die Drehung der Seilrolle zumindest in Abwickeldrehrichtung 13 gesperrt werden kann. Das Leinengehäuse ist zweischalig aufgebaut, so dass die Trennebene in Zeichenebene der Fig. 1 liegt und umfasst eine Austrittsöffnung 18 für das Seil 14. Das Seil 14 kann seilförmig oder als Gurt ausgebildet sein. Insoweit entspricht die Leine einer bekannten Leine mit aufwickelbarem Seil und bedarf daher keiner weiteren Erläuterung.

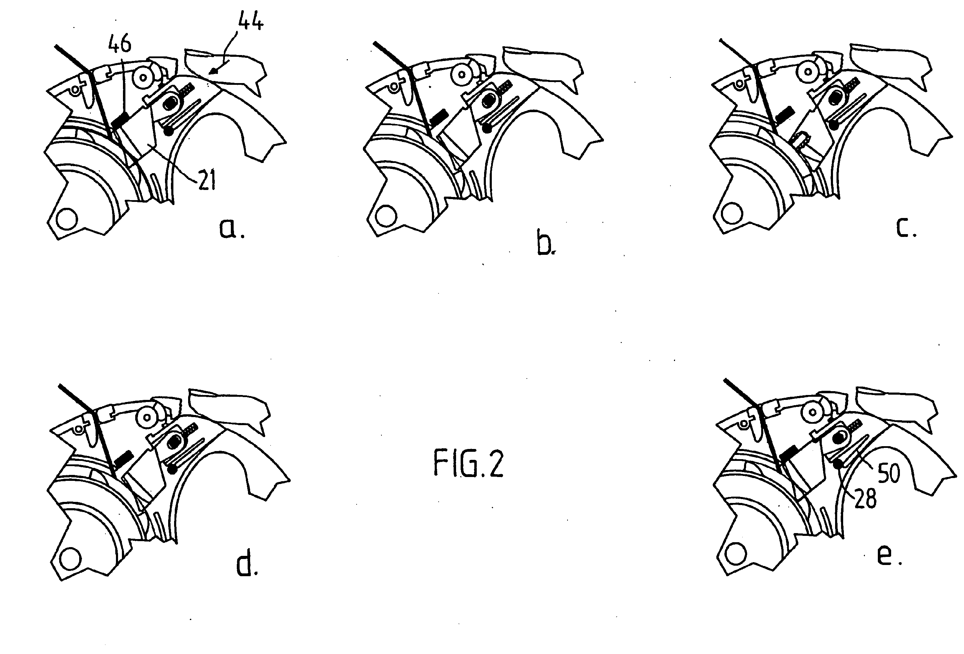

Die Bremstaste 17 ist im Leinengehäuse hin- und herverschiebbar gelagert. Durch Druck in Richtung des Pfeils 44 auf das Oberteil 20 wird die Bremstaste in Richtung auf die Seilrolle 11 in die Wirklage bewegt. Die Bewegungsrichtung der Bremstaste verläuft näherungsweise radial zur Seilrolle. In der Wirklage gemäß Fig. 2a wirkt die Bremstaste mit ihrem Unterteil 21 mit Vorsprüngen 22 zusammen, die entlang dem Umfang an der Seilrolle angeordnet sind. Die sägezahnförmigen Vorsprünge 22 weisen eine vordere radial zur Seilrolle verlaufende Anschlagfläche 23 auf, die an das Unterteil anschlagen, so dass die Drehbewegung der Seilrolle in Abwickelrichtung 13 gesperrt ist. Das Seil wird am weiteren Auslaufen gehindert.

Das Unterteil 21 ist am Oberteil 20 der Bremstaste um einen Zapfen 24 in einem Langloch 25 drehbar und in Bewegungsrichtung der Bremstaste verschiebbar gelagert. Weiterhin weist das Unterteil 21 eine Reibfläche 26 auf, die in der Wirkposition gegen die Umfangsfläche 27 der Seilrolle 11 drückt. Die Bewegung der Bremstaste 17 in Richtung auf die Seilrolle 11 wird durch einen Anschlag 28 begrenzt, der am Leinengehäuse befestigt ist und gegen den das Oberteil anschlägt. In der in Fig. 2a gezeigten Anschlagposition befindet sich der Drehzapfen 24 im oberen, der Seilrolle abgekehrten Bereich und vorzugsweise in etwa in der Mitte des Langlochs 25. Die Abmessungen, die Lage des Anschlags und die Länge des Langlochs sind so gewählt, dass der Druck auf das Oberteil 20 der Bremstaste in der Wirklage nicht unmittelbar auf das Unterteil wirkt. Der Druck wird vielmehr durch den Anschlag aufgenommen.

Es ist eine Feder 29 zwischen dem Oberteil und dem Unterteil der Bremstaste vorgesehen, die das Unterteil in der Wirkposition in Richtung auf die Seilrolle drückt. Hierdurch und durch die Begrenzung des Weges des Oberteils wird erreicht, dass die Reibfläche 26 des Unterteils mit einer definierten Kraft durch die Feder 29 auf die Seilrolle 11 drückt. Die Kraft der Feder ist dabei so bemessen, dass die dadurch erzeugte Reibkraft ausreicht, das Unterteil um den Drehzapfen 24 zu verschwenken. Gleichwohl kann sich die Seilrolle trotz anliegender Reibfläche in Aufwickelrichtung 15 drehen. Die Reibfläche rutscht dann über den Umfang 27. Es kann ein O-Ring 30 vorgesehen werden, der in einer Nut entlang dem Umfang der Seilrolle angeordnet ist und die Reibfläche der Seilrolle bildet. Dann kann ein besonders geräuscharmes Gleiten des Unterteils auf der Seilrolle erreicht werden.

In der Wirklage der Bremstaste wird demnach eine Drehung der Seilrolle in Abwickelrichtung 13 formschlüssig durch die Vorsprünge 22 verhindert. In Aufwickelrichtung 15 wird das Unterteil 21 gemäß Fig. 2b um den Drehzapfen 24 in Aufwickelrichtung verschwenkt, so dass es mit seiner dem Umfang der Seilrolle zugekehrten Rastnase 31 außer Eingriff mit den Vorsprüngen gelangt. Die Seilrolle kann sich demnach in Aufwickelrichtung weiter drehen. Wie in Fig. 2 c gezeigt, wird das Unterteil 21 durch die ständig wirkende Reibkraft in der verschwenkten Lage über den Vorsprüngen 22 gehalten, so dass Rattergeräusche vermieden werden.

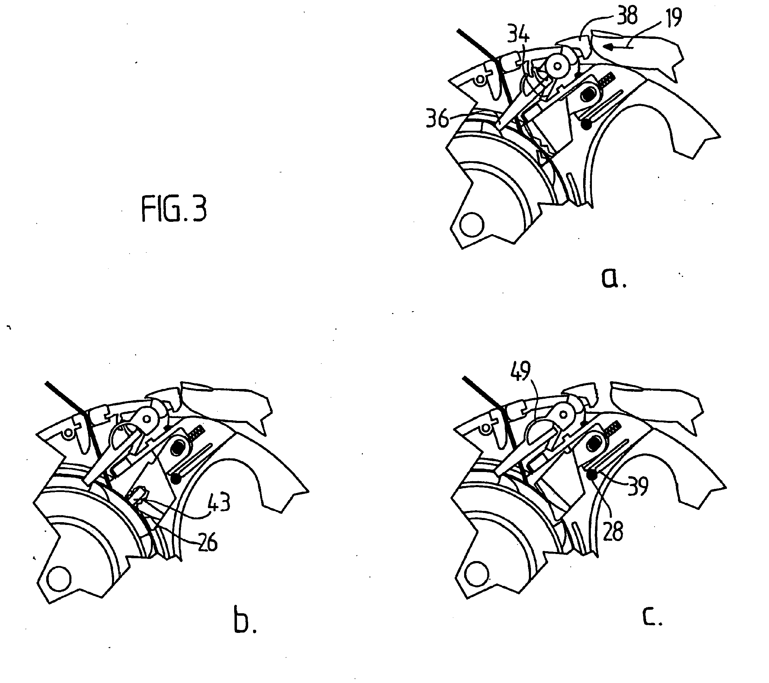

In der verschwenkten Lage ist das Unterteil außer Einriff mit den Vorsprüngen der Seilrolle 11. Gleichwohl liegt es bei gedrückter Bremstaste reibend auf der Umfangsfläche 27 an. Es kann vorgesehen werden, dass die Reibfläche 26 des Unterteils 21 in dem Bereich, der in dieser verschwenkten Lage gemäß Fig. 2 c auf der Umfangsfläche oder dem O-Ring reibt, aus einem verschleißfesten Material besteht oder einen verschleißfesten Einsatz 43 aufweist. Dieser Einsatz ist in Fig. 3 b gezeigt.

Dreht sich die Seilrolle 11 wieder in umgekehrter Drehrichtung, also in Abwickelrichtung 13, wird durch diese Reibung das Unterteil 21 gemäß Fig. 2 d in Richtung auf die Drehachse der Seilrolle verschwenkt, wodurch die Rastnase 31 wieder in Eingriff mit den Vorsprüngen 22 gelangen kann. Eine weitere Drehung der Seilrolle in Abwickelrichtung 13 wird in der zurückgeschwenkten Lage des Unterteils gemäß Fig. 2 e verhindert.

Mit einer solchen Ausbildung ist es möglich, das Seil bei gedrückter Bremstaste einzuholen. Die Kraft der Feder 29 drückt das Unterteil nur schwach auf den Umfang der Seilrolle, so dass sich diese aufgrund der Rückstellkraft der Rückstellfeder der Seilrolle weiter in Aufwickelrichtung drehen kann. Die Leine muss daher bei gedrückter Bremstaste in Richtung auf den Hund bewegt werden, wodurch die Zugkraft nachlässt und die Seilrolle sich in Aufwickelrichtung dreht. Das Unterteil 21 wird verschwenkt und gibt die Seilrolle frei. Die Reibfläche 26 bleibt jedoch in Kontakt mit dem O~Ring auf dem Umfang der Seilrolle. Das Seil wird aufgewickelt. Am Ende der Bewegung in Richtung auf den Hund nimmt der Zug auf das Seil wieder zu, so dass sich die Seilrolle wider in Abwickelrichtung 13 dreht. Durch die Reibung wird das Unterteil zurückgeschwenkt, so dass die Rastnase 31 wieder in Eingriff mit den Vorsprüngen 22 gelangen kann. Ein weiteres Abwickeln des Seils wird verhindert. Das Unterteil 21 stützt sich dabei an einem Anschlag 46 des Oberteils oder Gehäuses ab, welcher Anschlag ein Verschwenken des Unterteils in Abwickelrichtung begrenzt.

Die Leine weist weiterhin einen Verriegelungshebel 32 auf, mit dem die Bremstaste in der niedergedrückten Wirklage arretiert werden kann. Der Verriegelungshebel ist um eine Drehachse 33 zwischen einer Loslage und einer Arretierstellung im Gehäuse verschenkbar gelagert. Das eine Ende 38 ist als Bedienteil ausgebildet und ragt aus dem Gehäuse hinaus. Es kann durch einen Finger oder den Daumen einer Hand betätigt werden. In der in Fig. 1 gezeigten Loslage befindet sich das Bedienteil in der Nähe der Bremstaste. Durch Verschieben des Bedienteils des Verriegelungshebels in Richtung des Pfeils 19 von der Bremstaste weg wird der Verriegelungshebel 32 verschwenkt.

Der Verriegelungshebel 32 weist einen ersten Fortsatz 34 auf, der bei der Verschwenkung des Verriegelungshebels in Richtung auf die Bremstaste bewegt wird und in Eingriff mit einem Vorsprung 35 des Oberteils 20 der Bremstaste gelangen kann, wenn diese niedergedrückt wird. Dann bleibt das Oberteil in der in Fig. 3 a gezeigten niedergedrückten Lage. Wird der Verriegelungshebel bei nicht gedrückter Bremstaste betätigt, liegt der Fortsatz 34 an dem Oberteil an und verhindert ein Verschwenken.

Es ist ein zweiter Fortsatz 36 am Verriegelungshebel 32 vorhanden, der sich in die gleiche Richtung wie der erste Fortsatz 34 bewegt und ebenfalls in Eingriff mit den Vorsprüngen 22 der Umlenkrolle 11 gelangen kann. Wird der Verriegelungshebel bei niedergedrückter Bremstaste betätigt, wenn das Unterteil 21 in Eingriff mit einem Vorsprung ist, gelangt der zweite Fortsatz in Eingriff mit der der Anschlagfläche 23 abgekehrten Fläche 37 eines Vorsprungs der Seilrolle. Die Fläche 37 verläuft geneigt zur radial verlaufenden Anschlagfläche 23 derart, dass das der Seilrolle zugewandte freie Ende des Fortsatzes 36 gut zur Anlage an der Fläche 37 kommt.

Diese vollständig gesperrte Lage ist in Fig. 3 a gezeigt. Dann kann sich die Seilrolle weder in Abwickelrichtung noch in Aufwickelrichtung drehen, da der Fortsatz 36 eine Drehung in Aufwickelrichtung sperrt. Durch entsprechende Abmessungen des zweiten Fortsatzes 36 des Verriegelungshebels und der Rastnase 31 des Unterteils 21 kann eine im wesentlichen spielfreie Sperrung der Seilrolle erfolgen.

Fig. 3 b zeigt die Situation, wenn der Verriegelungshebel 32 beim Aufwickelvorgang und gedrückter Bremstaste in die Arretierstellung verschwenkt wird. Dann ist eine Drehung der Seilrolle solange möglich, bis der nächste Vorsprung in Eingriff mit dem zweiten Fortsatz gelangt. In dieser Lage befindet sich das Unterteil in seiner verschwenkten Lage und außer Eingriff mit den Vorsprüngen. In dieser Lage ist die Drehrolle in Abwickelrichtung drehbar, bis sich aufgrund der Drehbewegung das Unterteil zurückschwenkt und die Rastnase in Eingriff mit einem Vorsprung 22 gelangt. Der Fortsatz ist über ein Federelement 49 in eine Richtung federnd an dem Hebel angelenkt, so dass sich der Fortsatz über einen Vorsprung hinweg bewegen kann, wenn sich dieser gemäß Fig. 3 c in Abwickelrichtung bewegt. In die andere Richtung ist der Fortsatz nicht nachgiebig am Verriegelungshebel angeordnet.

Anschließend kommt die Rastnase des Unterteils 21 in Eingriff mit einem Vorsprung und der zweite Fortsatz 36 rastet mit der Fläche 37 eines Vorsprunges ein, wie es in Fig. 3 a gezeigt ist. Die Seilrolle befindet sich wieder im vollständig gesperrten Zustand.

Die Bremseinrichtung erlaubt durch Niederdrücken ohne Arretierung durch den Verriegelungshebel ein sicheres Halten des Tieres. Sofern die Leine auch beim Aufwickelvorgang gebremst werden soll, ist eine Überfahrmöglichkeit des Anschlags 28 vorgesehen, so dass der Druck auf die Bremstaste unmittelbar auf die Seilrolle wirkt. Im einzelnen ist die Anordnung so getroffen, dass der Anschlag 28 mit einer beweglichen Sperrlasche 50 des Oberteils 20 der Bremstaste zusammenwirkt. Bei normalem Niederdrücken der Bremstaste ist die Sperrlasche in der Ruhelage, und die Vorderkante 39 der Sperrlasche stößt gegen den Anschlag 28. Bei erhöhter Kraft in Richtung auf die Seilrolle wird die Lasche ausgelenkt, und das Oberteil kann weiter niedergedrückt werden. Dann kommt der Drehzapfen 24 an das untere Ende des Langlochs 25, und das Unterteil wird mit der auf das Oberteil ausgeübten Druckkraft gegen die Seilrolle gedrückt. Es wird eine Bremskraft durch erhöhte Reibung zwischen Reibfläche 26 und O-Ring 30 erzeugt, die größer ist als die Rückstellkraft der Feder der Seilrolle, so dass die Aufwickelbewegung gebremst wird.

Die Seilrolle kann in üblicher Weise einen mittleren Wickelraum 41 für das Seil aufweisen. Seitlich wird der Wickelraum durch Flansche 40 begrenzt. Noch weiter außen sind die Vorsprünge 22 angeordnet. Die Bremstaste umgreift mit dem Unterteil 21 den Wickelraum 40 und gelangt mit der Rastnase in Eingriff. Ein oder beide Flansche bilden mit ihrer Umfangsfläche die Reibfläche für das Unterteil. Der O-Ring kann auf einem der Flansche auf der äußeren Umfangsfläche in einer Nut eingelassen werden. Es ergibt sich ein kompakter Aufbau. Die Vorsprünge 22 und auch die Rastnasen 31 können auf beiden Seiten der Seilrolle vorhanden sein.

Die Bedienung einer derartigen Leine ist einfach. In der Ruhelage kann sich der Hund frei entsprechend der maximalen Seillänge bewegen. Bei niedergedrückter Bremstaste wird die Seillänge begrenzt, und es erfolgt ein Aufwickeln, wenn der Hund sich dem Hundeführer nähert. In der arretierten Lage ist die Leinenlänge begrenzt. Alle Betätigungen können mit einer Hand erfolgen. Die Bremstaste ist dabei entgegen der Kraft einer Feder 48 in Richtung auf die Seilrolle 11 in das Leinengehäuse drückbar. Wirkt keine Kraft auf die Bremstaste und ist der Verriegelungshebel in der Loslage wird die Bremstaste stets in ihre Ruhelage bewegt.

## Patentansprüche

1. Mechanisch auf- und abwickelbare Leine mit einer Seilrolle, einem Seil oder Gurt und einer Bremseinrichtung für die Seilrolle (11) zum Führen von Tieren, bei welcher Leine der Gurt oder das Seil (14) entgegen der Kraft einer Feder von der Seilrolle abwickelbar und aufgrund der Kraft der Feder auf die Seilrolle aufwickelbar ist, welche Bremseinrichtung eine Bremstaste (17) umfasst, die von einer Ruheposition, in der die Seilrolle frei drehbar ist, in eine Wirkposition gebracht werden kann, in der die Bremstaste ein Abwickeln des Seils von der Seilrolle sperrt, welche Bremstaste ein Oberteil (20), das aus dem Leinengehäuse (12) hinausragt und eine Betätigung durch den Benutzer erlaubt, und ein Unterteil (21) aufweist, das mit der Seilrolle zusammenwirkt, **dadurch gekennzeichnet, dass** das Unterteil mit dem Oberteil verschwenkbar verbunden ist derart, dass das Unterteil in Aufwickelrichtung (15) des Seils verschwenkbar ist derart, dass in der Wirkposition der Bremstaste ein Abwickeln des Seils von der Seilrolle verhindert wird und ein Aufwickeln auf die Seilrolle möglich ist, und dass in der Wirkposition das freie Ende (26) des Unterteils reibend an der Seilrolle (11) anliegt, um das Unterteil durch eine Drehbewegung der Seilrolle in Aufwickelrichtung zu verschwenken.

2. Leine nach Anspruch 1, **dadurch gekennzeichnet, dass** das Unterteil (21) der Bremstaste in Eindrückrichtung verschiebbar mit dem Oberteil (20) verbunden ist.

3. Leine nach Anspruch 2, **dadurch gekennzeichnet, dass** das Unterteil (21) in oder mit einem Langloch (25) auf einem Zapfen (24) verschwenkbar und verschiebbar mit dem Oberteil (20) verbunden ist.

4. Leine nach Anspruch 2 oder 3, **dadurch gekennzeichnet, dass** das Unterteil (21) entgegen der Kraft einer Feder (29) verschiebbar mit dem Oberteil verbunden ist.

5. Leine nach einem der Ansprüche 1 bis 4, **dadurch gekennzeichnet, dass** die Bremstaste bis zu einem Anschlag (28) in Richtung auf die Seilrolle (11) bewegbar ist.

6. Leine nach Anspruch 4 und 5, **dadurch gekennzeichnet, dass** die Kraft der Feder (29) so bemessen ist, dass sich die Seilrolle bei bis zum Anschlag gedrückter Bremstaste in Aufrollrichtung drehen kann.

7. Leine nach einem der Ansprüche 4 bis 6, **dadurch gekennzeichnet, dass** das freie Ende (26) des Unterteils (21) in Bezug auf seine Drehachse konkav ausgebildet ist derart, dass es sowohl in der unverschwenkten als auch in der verschwenkten Position reibend an der Seilrolle anliegt.

8. Leine nach einem der Ansprüche 1 bis 7, **dadurch gekennzeichnet, dass** das Unterteil (21) reibend an der äußeren Umfangsfläche (27) der Seilrolle anliegt.

9. Leine nach einem der Ansprüche 1 bis 8, **dadurch gekennzeichnet, dass** die Reibfläche (27) der Seilrolle mit einem Reibelement (30) versehen ist.

10. Leine nach Anspruch 9, **dadurch gekennzeichnet, dass** das Reibelement (30) als O-Ring ausgebildet ist und um den Umfang der Seilrolle gelegt ist.

11. Leine nach einem der Ansprüche 1 bis 10, **dadurch gekennzeichnet, dass** die Reibfläche (26) des Unterteils zumindest in dem Bereich, der in der verschwenkten Position reibend an der Seilrolle anliegt, aus verschleißfestem Material besteht oder ein Reibelement (43) aus verschleißfestem Material aufweist.

12. Leine nach einem der Ansprüche 5 bis 11, **dadurch gekennzeichnet, dass** die Bremstaste nach Überwinden einer Sperrlasche (50) in Richtung auf die Seilrolle über den Anschlag (28) hinaus bewegbar ist.

13. Leine nach Anspruch 12, **dadurch gekennzeichnet, dass** die Sperrlasche durch Aufbringen einer vorbestimmbaren Kraft auf das Oberteil überwindbar ist.

14. Leine nach einem der Ansprüche 1 bis 13, **dadurch gekennzeichnet, dass** die Bremstaste entgegen der Kraft einer Feder (45) in Richtung auf die Seilrolle bewegbar ist.

15. Leine nach einem der Ansprüche 1 bis 14, **dadurch gekennzeichnet, dass** das Oberteil (20) das Unterteil (21) entlang der Schieberbewegung führt und dass das Oberteil einen Anschlag (46) für das Unterteil in Abwickelrichtung bildet.

16. Leine nach einem der Ansprüche 1 bis 15, **dadurch gekennzeichnet, dass** ein Verriegelungshebel (32) vorhanden ist, der die Bremstaste (17) in der Wirkposition arretiert.

17. Leine nach Anspruch 16, **dadurch gekennzeichnet, dass** der Verriegelungshebel (32) mit dem Oberteil (20) der Bremstaste zusammenwirkt.

18. Leine nach Anspruch 16 oder 17, **dadurch gekennzeichnet, dass** der Verriegelungshebel (32) in der Arretierlage die Seilrolle in Aufwickelrichtung (15) sperrt.

19. Leine nach einem der Ansprüche 16 bis 18, **dadurch gekennzeichnet, dass** die Seilrolle entlang ihrem Umfang eine Vielzahl von Vorsprüngen (22) aufweist, die bei gedrückter Bremstaste mit deren Unterteil in Abwickelrichtung (13) zusammenwirken und die in der Arretierlage des Verriegelungshebels (32) mit diesem zusammenwirken, um die Seilrolle in Aufwickelrichtung zu sperren.

20. Leine nach einem der Ansprüche 16 bis 19, **dadurch gekennzeichnet, dass** der Verriegelungshebel (32) zwischen einer Loslage und der Arretierlage um eine Achse (33) verschwenkbar im Leinengehäuse gelagert ist und zwei Fortsätze (34, 36) aufweist, von denen der eine in Arretierlage mit dem Oberteil (20) der Bremstaste und der andere mit der Seilrolle (11) zusammenwirkt.

21. Leine nach einem der Ansprüche 16 bis 20, **dadurch gekennzeichnet, dass** die Abmessungen des Verriegelungshebels (32) und des Unterteils (21) der Bremstaste so gewählt sind, dass die Seilrolle in der gesperrten Lage fest oder zumindest nur mit geringem Spiel gehalten ist.

## Claims

1. A leash capable of being mechanically wound up and unwound and having a cord pulley, a cord or belt and a braking device for the cord pulley (11) for leading animals, in which leash the belt or cord (14) is capable of being unwound from the cord pulley against the force of a spring and of being wound up onto the cord pulley by virtue of the force of the spring, which braking device comprises a brake button (17) which can be moved from a rest position, in which the cord pulley is freely rotatable, into an operative position, in which the brake button blocks an unwinding of the cord from the cord pulley, which brake button has an upper part (20), which projects out of the cord casing (12) and permits actuation by the user, and a lower part (21), which co-operates with the cord pulley, **characterized in that** the lower part is connected to the upper part in a pivotable manner in such a way that the lower part is pivotable in the winding-up direction (15) of the cord in such a way that in the operative position of the brake button an unwinding of the cord from the cord pulley is prevented and a winding-up onto the cord pulley is made possible, and in the operative position the free end (26) of the lower part rests against the cord pulley (11) with friction in order to pivot the lower part by a rotational movement of the cord pulley in the winding-up direction.

2. A leash according to claim 1, **characterized in that** the lower part (21) of the brake button is connected to the upper part (20) so as to be displaceable in the pressing-in direction.

3. A leash according to claim 2, **characterized in that** the lower part (21) is connected to the upper part (20) so as to be pivotable and displaceable in or with an elongate hole (25) in a pin (24).

4. A leash according to claim 2 or 3, **characterized in that** the lower part (21) is connected to the upper part so as to be displaceable against the force of a spring (29).

5. A leash according to any one of claims 1 to 4, **characterized in that** the brake button is movable as far as a stop (28) in the direction towards the cord pulley (11).

6. A leash according to claims 4 and 5, **characterized in that** the force of the spring (29) is dimensioned in such a way that the cord pulley can turn in the rolling-up direction when the brake button is pressed as far as the stop.

7. A leash according to any one of claims 4 to 6, **characterized in that** the free end (26) of the lower part (21) is made concave with respect to its axis of rotation in such a way that it rests against the cord pulley with friction both in the non-pivoted and in the pivoted position.

8. A leash according to any one of claims 1 to 7, **characterized in that** the lower part (21) rests against the external peripheral face (27) of the cord pulley with friction.

9. A leash according to any one of claims 1 to 8, **characterized in that** the friction face (27) of the cord pulley is provided with a friction element (30).

10. A leash according to claim 9, **characterized in that** the friction element (30) is designed in the form of an O-ring and is laid around the periphery of the cord pulley.

11. A leash according to any one of claims 1 to 10, **characterized in that** the friction face (26) of the lower part consists of wear-resistant material or has a friction element (43) of wear-resistant material at least in the region which rests against the cord pulley with friction in the pivoted position.

12. A leash according to any one of claims 5 to 11, **characterized in that** after overcoming a locking tab (20) the brake button is movable beyond the stop (28) in the direction of the cord pulley.

13. A leash according to claim 12, **characterized in that** the locking tab is capable of being overcome by the application of a pre-determinable force to the upper part.

14. A leash according to any one of claims 1 to 13, **characterized in that** the brake button is movable in the direction towards the cord pulley against the force of a spring (45).

15. A leash according to any one of claims 1 to 14, **characterized in that** the upper part (20) guides the lower part (21) along the displacement movement, and the upper part forms a stop (46) of the lower part in the unwinding direction.

16. A leash according to any one of claims 1 to 15, **characterized in that** a locking lever (32) is present which locks the brake button (17) in the operative position.

17. A leash according to claim 16, **characterized in that** the locking lever (32) co-operates with the upper part (20) of the brake button.

18. A leash according to claim 16 or 17, **characterized in that** in the locking position the locking lever (32) locks the cord pulley in the winding-up direction (15).

19. A leash according to any one of claims 16 to 18, **characterized in that** along its periphery the cord pulley has a plurality of projections (22), which when the brake button is pressed co-operate with the lower part thereof in the unwinding direction (13) and which in the locking position of the locking lever (32) co-operate with the latter in order to lock the cord pulley in the winding-up direction.

20. A leash according to any one of claims 16 to 19, **characterized in that** the locking lever (32) is mounted in the cord casing so as to be pivotable about an axle (33) between a loose position and the locked position and it has two extensions (34, 36) one of which co-operates with the upper part (20) of the brake button and the other with the cord pulley (11) in the locked position.

21. A leash according to any one of claims 16 to 20, **characterized in that** the dimensions of the locking lever (32) and of the lower part (21) of the brake button are selected in such a way that the cord pulley is held in a fixed manner or at least only with a slight degree of play in the locked position.

## Revendications

1. Laisse enroulable et déroulable mécaniquement comprenant un rouleau de corde, une corde ou sangle et un dispositif de freinage pour le rouleau de corde (11) pour mener des animaux, laisse dans laquelle la sangle ou la corde (14) peut être déroulée du rouleau de corde contre la force d'un ressort, et enroulée sur ce rouleau de corde sous l'action de la force de ce ressort, ce dispositif de freinage comportant une manette de freinage (17) qui peut être amenée, d'une position de repos dans laquelle le rouleau de corde est librement mobile en rotation dans une position active dans laquelle elle bloque le déroulement de la corde du rouleau de corde, cette manette de freinage comportant une partie supérieure (20) qui fait saillie à l'extérieur du boitier (12) de laisse et permet un actionnement par l'utilisateur, et une partie inférieur (21) qui coopère avec le rouleau de corde,
**caractérisée en ce que**
la partie inférieure est reliée à la partie supérieure en pouvant pivoter par rapport à celle-ci de façon à pouvoir pivoter dans le sens de l'enroulement (15) de la corde, pour, dans la position active de la manette de freinage, empêcher un déroulement de la corde du rouleau de corde et permettre un enroulement sur le rouleau de corde et dans la position active, l'extrémité libre (26) de la partie inférieure s'applique par friction sur le rouleau de corde, pour faire pivoter cette partie inférieure dans le sens de l'enroulement sous l'action d'un mouvement de rotation du rouleau de corde.

2. Laisse conforme à la revendication 1,
**caractérisée en ce que**
la partie inférieure (21) de la manette de freinage est reliée à la partie supérieure (20) de celle-ci en pouvant coulisser dans la direction de compression.

3. Laisse conforme à la revendication 2,
**caractérisée en ce que**
la partie inférieure (21) est reliée à la partie supérieure (20) en pouvant pivoter ou coulisser sur un tourillon (24) dans ou par un trou oblong (25).

4. Laisse conforme à la revendication 2 ou 3,
**caractérisée en ce que**
la partie inférieure (21) est reliée à la partie supérieure (23) en pouvant coulisser contre la force d'un ressort (29).

5. Laisse conforme à l'une des revendications 1 à 4,
**caractérisée en ce que**
la manette de freinage peut se déplacer sur le rouleau de corde (11) jusqu'à une butée (28).

6. Laisse conforme à la revendication 4 ou 5,
**caractérisée en ce que**
la force du ressort (29) est dimensionnée de sorte que le rouleau de corde puisse se déplacer en rotation dans le sens de l'enroulement lorsque la manette de freinage est comprimée jusqu'à venir en butée.

7. Laisse conforme à l'une des revendications 4 à 6,
**caractérisée en ce que**
l'extrémité libre (26) de la partie inférieure (21) a une forme concave par rapport à son axe de rotation de sorte qu'elle s'applique par friction sur le rouleau de corde en position non pivotée et également en position pivotée.

8. Laisse conforme à l'une des revendications 1 à 7,
**caractérisée en ce que**
la partie inférieure (21) s'applique par friction sur la surface périphérique extérieure (27) du rouleau de corde.

9. Laisse conforme à l'une des revendications 1 à 8,
**caractérisée en ce que**
la surface de friction (27) du rouleau de corde est équipée d'un élément de friction (30).

10. Laisse conforme à la revendication 9,
**caractérisée en ce que**
l'élément de friction (30) est réalisé sous la forme d'une bague torique et est monté autour de la périphérie du rouleau de corde.

11. Laisse conforme à l'une des revendications 1 à 10,
**caractérisée en ce que**
la surface de friction (26) de la partie inférieure est réalisée en un matériau résistant à l'usure ou comporte un élément de friction (43) en un matériau résistant à l'usure au moins dans la zone qui s'applique par friction sur le rouleau de corde dans la position pivotée.

12. Laisse conforme à l'une des revendications 5 à 11,
**caractérisée en ce qu'**
après avoir franchi une languette de blocage (50) la manette de freinage peut être encore déplacée dans la direction du rouleau de corde, au-delà de la butée (28).

13. Laisse conforme à la revendication 12,
**caractérisée en ce que**
la languette de blocage peut être franchie en appliquant une force prédéterminée sur la partie supérieure.

14. Laisse conforme à l'une des revendications 1 à 13,
**caractérisée en ce que**
la manette de freinage peut être déplacée contre la force d'un ressort (45) en direction du rouleau de corde.

15. Laisse conforme à l'une des revendications 1 à 14,
**caractérisée en ce que**
la partie supérieure (20) guide la partie inférieure (21) dans son mouvement de coulissement, et la partie supérieure forme une butée (46) pour la partie inférieure dans le sens du déroulement.

16. Laisse conforme à l'une des revendications 1 à 15,
**caractérisée en ce qu'**
il est prévu un levier de verrouillage (32) qui bloque la manette de freinage (17) dans la position active.

17. Laisse conforme à la revendication 16,
**caractérisée en ce que**
le levier de verrouillage (32) coopère avec la partie supérieure (20) de la manette de freinage.

18. Laisse conforme à la revendication 16 ou 17,
**caractérisée en ce que**
dans la position de blocage, le levier de verrouillage (32) bloque le rouleau de corde dans le sens de l'enroulement (15).

19. Laisse conforme à l'une des revendications 16 à 18,
**caractérisée en ce que**
le rouleau de corde comporte, le long de sa périphérie, une série de saillies (22) qui, lorsque la manette de freinage est comprimée, coopèrent avec sa partie inférieure dans le sens du déroulement (13), et qui dans la direction de blocage du levier de verrouillage (32) coopèrent avec ce levier pour bloquer le rouleau de corde dans le sens de l'enroulement.

20. Laisse conforme à l'une des revendications 16 à 19,
**caractérisée en ce que**
le levier de verrouillage (32) est logé dans le boitier de la laisse en pouvant pivoter entre une position relâchée et la position de blocage autour d'un axe (33), et comporte deux prolongements (34, 36) dont l'un coopère avec la partie supérieure (20) de la manette de freinage dans la position de blocage tandis que l'autre coopère avec le rouleau de corde (11).

21. Laisse conforme à l'une des revendications 16 à 20,
**caractérisée en ce que**
les dimensions du levier de verrouillage (32) et de la partie inférieure (21) de la manette de freinage sont choisies de sorte que dans la position bloquée le rouleau de corde soit maintenu fixe ou au moins avec seulement un faible jeu.
